**Europäisches Patentamt**

**European Patent Office**

**Office européen des brevets**

(11) Veröffentlichungsnummer: **0 191 151**
A2

# EUROPÄISCHE PATENTANMELDUNG

(21) Anmeldenummer: 85114637.3

(22) Anmeldetag: 18.11.85

(51) Int. Cl.⁴: **B 01 D 53/26**, F 04 B 39/16

(30) Priorität: 14.12.84 DE 3445699

(43) Veröffentlichungstag der Anmeldung: 20.08.86
Patentblatt 86/34

(84) Benannte Vertragsstaaten: **AT BE DE FR GB IT NL SE**

(71) Anmelder: **KNORR-BREMSE AG, Moosacher Strasse 80 Postfach 401060, D-8000 München 40 (DE)**

(72) Erfinder: **Belser, Friedrich, Holzstrasse 22, D-8000 München 5 (DE)**
Erfinder: **Gerum, Eduard, Dr., Strassbergerstrasse 32, D-8000 München 40 (DE)**
Erfinder: **Riegel, Harald, Giselastrasse 31, D-8000 München 40 (DE)**
Erfinder: **Unger, Hans, St. Benediktstrasse 7, D-8040 Unterschleissheim (DE)**

(54) Lufttrocknungseinrichtung für Druckluftanlagen.

(57) Die Lufttrocknungseinrichtung für im Intervallbetrieb aufladbare Druckluftanlagen weist eine regenerierbare Trocknungspatrone (5) und einen die Luftfeuchte im Luftvorratsbehälter (16) messenden Feuchtesensor (15) auf. Eine Auswertelektronik (18) veranlaßt während der Leerlaufphase des Kompressors (1) und einen Schwellwert übersteigender Luftfeuchte im Luftvorratsbehälter (16) ein Regenerieren der Trocknungspatrone (5). Ist während einer bestimmten Anzahl von aufeinanderfolgenden Leerlaufphasen jedesmal ein Regenerieren erforderlich, erregt die Auswerteelektronik (18) ein Warnsignal (22) zur Anzeige, daß die Trocknungspatrone (5) verbraucht ist und ausgetauscht werden muß.

Knorr-Bremse AG                    München, den 13.12.1984

Moosacher Straße 80                TP-ku

8000 München 40                    unser Zeichen: - 1826 -

                                   Text.Nr.: 0074P

### Lufttrocknungseinrichtung für Druckluftanlagen

Die Erfindung betrifft eine Lufttrocknungseinrichtung für im Intervallbetrieb aus einem Kompressor aufladbare Druckluftanlagen, insbesondere Druckluftbremsanlagen von Kraftfahrzeugen, mit einer ein regenerierbares Trocknungsmittel beinhaltenden Trocknungspatrone und einer einen Druckregler, ein Abblasventil und ein Umschaltventil aufweisenden Umschaltvorrichtung, welche vom Druckregler gesteuert in ihrer einen Schaltstellung bei einen Grenzwert unterschreitender Druckhöhe in der Druckluftanlage bei geschlossenem Abblasventil ein Durchströmen der Trocknungspatrone mit vom Kompressor zur Druckluftanlage zu fördender, zu trocknender Durckluft und in ihrer zweiten Schaltstellung bei den Grenzwert übersteigender Druckhöhe in der Druckluftanlage ein Öffnen des hierbei die vom Kompressor geförderte Luft zur Atmosphäre abblasenden Abblasventils bewirkt, wobei in der zweiten Schaltstellung ein gedrosseltes, begrenztes Durchströmen der Trocknungspatrone mit Regenerierluft freigebbar ist.

Eine derartige Lufttrocknungseinrichtung ist aus der EU - PS 36 569 bekannt. Die rein pneumatisch ausgebildete Umschaltvorrichtung steuert hierbei in Verbindung mit einem pneumatischen Zeitventil die Regenerierluft derart, daß beim Einstellen der zweiten Schaltstellung stets Regenerierluft für eine bestimmte Zeitspanne fließt. Das Regenerieren der Trocknungspatrone erfolgt also während jeder Leerlaufphase des Kompressors unabhängig davon, ob das Regenerieren tatsächlich erforderlich ist; hierdurch kann unnötig Druckluft verbraucht werden.

Aus den DE-OSen 23 26 823 und 27 46 204 ist es für Lufttrocknungseinrichtungen mit zwei in Wechselbetrieb zu betreibenden Trocknungspatronen bekannt, die Wechselschaltung zwischen die Druckluft trocknender und sich regenerierender Trocknungspatrone in Abhängigkeit von der Luftfeuchtigkeit, insbesondere in Abhängigkeit von in den Trocknungspatronen anzuordnenden Feuchtesensoren zu steuern. Diese Anordnungen sind jedoch nicht für im Intervallbetrieb durch nur eine Trocknungspatrone aufweisende Luftrocknungseinrichtungen aufladbare Druckluftanlagen gemäß den eingangs angeführten Merkmalen verwendbar. Für eine ähnliche, ebenfalls zwei Trocknungspatronen aufweisende Lufttrocknungseinrichtung ist es aus der DE-OS 32 31 519 des weiteren bekannt, die Patronenumschaltung mittels eines elektronischen Zeitschaltgliedes zu bewirken, welches mit Hilfe eines Druckschalters auf die Förderzeiten des Druckregelers abstimmbar ist.

Es ist Aufgabe der Erfindung, eine Lufttrocknungseinrichtung der eingangs angegebenen Art mit einfachen Mitteln derart auszugestalten, daß sie unter Vermeiden der Mängel der bekannten Lufttrocknungseinrichtungen einen sicheren Betrieb bei Vermeiden eines unnötigen Luftverbrauches gewährleistet.

Diese Aufgabe wird durch die Erfindung dadurch gelöst, daß der Trocknungspatrone wie an sich bekannt ein in Abhängigkeit von der Feuchte der in die Durckluftanlage geförderten Druckluft ein erstes, elektrisches Signal abgebender Feuchtesensor nachgeschaltet ist, daß ein in Abhängigkeit von der Druckluftförderung des Kompressors schaltender, ein zweites, elektrisches Signal abgebender Druckwächter vorgesehen ist, daß eine von den beiden Signalen angesteuerte Auswerteelektronik bei einen Schwellwert überschreitende Luftfeuchte und keine Druckluftförderung anzeigenden Signalen ein hierbei das Durchströmen der Trocknungspatrone mit der Regenerierluft freigebendes Magnetventil schaltet, und daß die Auswerteelektronik einen Zähler beinhaltet, der bei Auftreten eines gleichzeitigen Anstehens der ein Schalten des Magnetventils bewirkenden Signale um den Wert 1 weiterzählt, bei alleinigem Anstehen des zweiten dieser Signale seinen Inhalt löscht und bei Erreichen einer vorbestimmten Zählerzahl eine Warnanzeige einschaltet.

Die nach der weiteren Erfindung vorteilhaften Ausgestaltungsmöglichkeiten einer derartigen Lufttrocknungseinrichtung sind den Merkmalen der Unteransprüche entnehmbar.

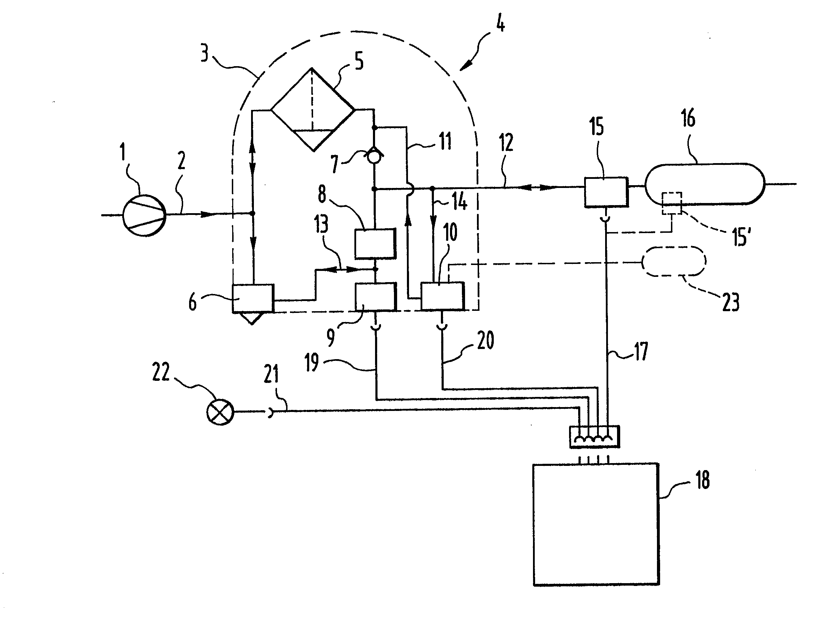

In der Zeichnung ist schematisch ein Ausführungsbeispiel für eine nach der Erfindung ausgebildete Lufttrocknungseinrichtung dargestellt.

Vom Druckausgang eines Kompressors 1 führt eine Rohrleitung 2 in das gestrichelt angedeutete Gehäuse 3 eines Lufttrockners 4. Im Gehäuse 4 sind eine mit regenerierbarem Trocknungsmittel gefüllte Trocknungspatrone 5, ein Abblasventil 6, ein Rückschlagventil 7, ein Druckregler 8, ein Druckwächter 9 und ein Magnetventil 10 angeordnet. Die Rohrleitung 2 steht mit dem Abblasventil 6 und einem Eingang der Trocknungspatrone in Verbindung. Vom Ausgang der Trocknungspatrone 5 führt ein Kanal 11 zum Magnetventil 10 und parallel hierzu über das in dieser Strömungsrichtung öffnende Rückschlagventil 7 zur Ausgangsleitung 12 des Lufttrockners 4 sowie zum Steuereingang des Druckreglers 8. Der Schaltausgang des Druckreglers 8 steht über einen Steuerkanal 13 mit dem Steuereingang des Abblasventils 6 und mit dem Druckwächter 9 in Verbindung. Ein weiterer Kanal 14 verbindet innerhalb des Lufttrockners 4 die Ausgangsleitung 12 mit dem Magnetventil 10. Der Durchgang durch den Kanal 14, das Magnetventil 10 und den Kanal 11 ist durch entsprechende Dimensionierung gedrosselt, gegebenenfalls kann eine besondere, nicht dargestellte Düse in diesen Verbindungsweg 14,10,11 eingeordnet sein. Die Ausgangsleitung 12 führt über einen Feuchtesensor 15 zu einem Luftvorratsbehälter 16 einer im übrigen nicht dargestellten Druckluftanlage, insbesondere einer Druckluftbremsanlage eines Kraftfahrzeuges. Der elektrische Meßausgang des Feuchtesensors 15 ist durch ein Kabel 17 mit einer Auswerteelektronik 18 verbunden, er gibt bei Erreichen einer bestimmten Luftfeuchte in der Ausgangsleitung 12 und damit auch dem Luftvorratsbehälter 16 ein erstes, elektrisches Signal ab und beendet dieses Signal, sobald die Luftfeuchte wieder unter den Feuchtewert absinkt. Der Feuchtesensor 15 kann dabei eine Schalthysterese aufweisen, so daß er die Signalabgabe bei einem höheren Luftfeuchte-Schwellwert ein- und bei einem niedrigeren Luftfeuchte-Schwellwert wieder ausschaltet; der Einschalt-Schwellwert kann dabei bei ca. 25 % relativer Luftfeuchte und der Ausschalt-Schwellwert bei ca. 10 % relativer Luftfeuchte liegen. Eine im Druckwächter 9 befindliche, elektrische Kontakteinrichtung zur Abgabe eines zweiten, elektrischen Signales ist über ein Kabel 19 mit der Auswerteelektronik 18 verbunden. Die Erregungsspule des Magnetventils 10 ist über ein weiteres Kabel 20 an die Auswertelektronik 18 angeschlossen. Schließlich führt ein Kabel 21 von der Auswerteelektronik 18 zu einem als Warnleuchte ausgebildeten Warnsignal 22.

Der Druckregler 8 hält bei Unterschreiten eines bestimmten Grenzdruckes in der Ausgangsleitung 12 und damit dem Luftvorratsbehälter 16 den Steuerkanal 13 entlüftet, bei Überschreiten des erwähnten Grenzdruckes beaufschlagt er den Steuerkanal 13 mit Druckluft. Der Druckwächter 9 schaltet in Abhängigkeit vom im Steuerkanal 13 anstehenden Druck, so daß das im Kabel 19 anstehende Signal sich in Abhängigkeit vom Über- bzw. Unterschreiten des erwähnten Grenzdruckes ändert. Das Abblasventil 6 ist bei drucklosem Steuerkanal 13 geschlossen, bei druckluftbeaufschlagtem Steuerkanal 13 öffnet es eine großquerschnittige Verbindung von der Rohrleitung 2 zur Atmosphäre.

In der Förderphase, bei den Grenzwert unterschreitender Druckhöhe im Luftvorratsbehälter 16, fördert der Kompressor 1 Druckluft durch die Trocknungspatrone 5 und das Rückschlagventil 7 zum Luftvorratsbehälter 16; der Feuchtesensor 15 gibt dabei in Abhängigkeit vom Über- bzw. Unterschreiten des Luftfeuchte-Schwellwertes ein bestimmtes Signal ab. Der Druckregler 8 hält den Steuerkanal 13 entlüftet, so daß das Abblasventil 6 geschlossen ist und der Druckwächter 9 in das Kabel 19 ein das Unterschreiten des Druck-Grenzwertes anzeigendes Signal abgibt.

Infolge dieses Signals hält die Elektronik 18 das Magnetventil 10 unerregt und geschlossen. Sobald im Luftvorratsbehälter 16 der Druck-Grenzwert erreicht wird, schaltet der Druckregler 8 und speist in den Steuerkanal 13 Druckluft ein, wodurch das Abblasventil 6 öffnet und der Druckwächter 9 in das Kabel 19 das ein Überschreiten des Druck-Grenzwertes anzeigende Signal abgibt. Durch Öffnen des Abblasventils 6 stellt der Kompressor 1 in der nun einsetzenden Leerlaufphase seine Druckluftförderung ein, er fördert lediglich drucklos Luft durch die Leitung 2 und das Abblasventil 6 zur Atmosphäre. Das Rückschlagventil 7 schließt hierbei ein Entlüften des Luftvorratsbehälters 16 durch das Abblasventil 6 aus. Falls zu diesem Zeitpunkt der Feuchtesensor 5 den Schwellwert unterschreitende Luftfeuchte im Luftvorratsbehälter 16 anzeigt, hält die Auswerteelektronik 18 das Magnetventil 10 unerregt und geschlossen. Falls jedoch zu diesem Zeitpunkt der Feuchtesensor 15 ein eine den Schwellwert übersteigende Luftfeuchte im Luftvorratsbehälter 16 anzeigendes Signal in das Kabel 17 und damit zur Auswerteelektronik 18 abgibt, erregt diese bei zugleich in Kabel 19 anstehendem, das Überschreiten des Druck-Grenzwertes anzeigendem Signal das Magnetventil 10, so daß dieses öffnet. Aus dem Luftvorratsbehälter 16 fließt nun Regenerierluft durch die Kanäle 14 und 11 zur Trocknungspatrone 5, durchfließt letztere unter Regenerieren des Trocknungsmittels und gelangt durch das Abblasventil 6 zur Atmosphäre. Die Auswerteelektronik 18 beinhaltet ein Zeitglied, welches nach Ablauf einer bestimmten Zeitspanne die Erregung des Magnetventils 10 und damit das Fließen der Regenerierluft unterbricht. Die Zeitspanne ist derart bemessen, daß ein sicheres Regenerieren des Trocknungsmittels erreicht wird.

Nach Absinken des im Luftvorratsbehälter 17 anstehenden Druckes unter den Druckgrenzwert setzt durch Rückschalten des Druckreglers 8 ein neuer Förderzyklus ein, während welchem der Kompressor 1 Druckluft durch die sie hierbei trocknende Trocknungspatrone 5 zum Luftvorratsbehälter 16 fördert.

Die Auswerteelektronik 18 beinhaltet weiterhin einen Zähler, welcher dann, wenn bei Beendigen einer Förderphase und Beginn der Leerlaufphase für den Kompressor 1 mehrmals hintereinander der Luftfeuchte-Schwellwert im Luftvorratsbehälter 16 überschritten wurde und somit ein Regenerieren des Trocknungsmittels erfolgte, das Warnsignal 22 betätigt und somit anzeigt, daß das Trocknungsmittel in der Trocknungspatrone 5 verbraucht ist und ausgetauscht werden muß. Die Anzahl der aufeinanderfolgenden Leerlaufphasen mit Regenerieren des Trocknungsmittels ist je nach Auslegung der Lufttrocknungseinrichtung und der Druckluftanlage festzulegen, sie kann zwischen 5 und 50, vorzugsweise bei 20 liegen. Der erwähnte Zähler zählt also bei Auftreten eines gleichzeitigen Anstehens der ein Schalten des Magnetventils 10 in Öffnungsrichtung bewirkenden Signale in den Kabeln 17 und 19 von einem Wert 1 weiter, bei alleinigem Anstehen eines die Leerlaufphase des Kompressors 1 signalisierenden Signals im Kabel 19 wird der gesamte Inhalt des Zählers gelöscht und dieser auf 0 zurückgestellt. Sobald der Zählerinhalt einen bestimmten Wert, beispielseise 20, erreicht, wird vermittels der Auswerteelektronik 18 ein Betätigen des Warnsignals 22 veranlaßt.

In Abänderung zu vorstehend beschriebenem Ausführungsbeispiel ist es möglich, das Magnetventil derart auszubilden, daß es im unerregten Zustand den Kanal 14 mit einem relativ kleinen Luftbehälter 23 verbindet, wie es gestrichelt eingezeichnet ist. Im erregten Zustand sperrt bei dieser Ausführung das Magnetventil 10 den Kanal 14 ab und verbindet den Luftbehälter 23 mit dem Kanal 11. Das Zeitglied in der Auswerteelektronik 18 kann bei dieser Ausführungsform entfallen. Der Luftbehälter 23 steht mit Ausnahme der Erregungszeiten für das Magnetventil 10 durch Kanal 14 mit dem Luftvorrtsbehälter 16 in Verbindung und wird aus diesem mit Regenerierluft aufgeladen; bei Erregung des Magnetventils 10 entleert sich der Luftbehälter 23 durch das Magnetventil 10, den Kanal 11 und die Trocknungspatrone 5 unter deren Regenerierung zur Atmosphäre. Die Größe des Luftbehälters 23 bestimmt hierbei die Menge der Regenerierluft. In weitere Abänderung kann der Kanal 14 entfallen, wenn der Kanal 11 über ein in dieser Strömungsrichzung öffnendes Rückschlagventil mit dem Luftbehälter 23 verbunden wird. Das bei Erregung öffnende Magnetventil 10 muß in dieser Ausführung das erwähnte Rückschlagventil überbrücken.

In weiterer Abänderung kann es zweckmäßig sein, den Feuchtesensor 15 nicht in die Ausgangsleitung 12 einzuordnen, sondern in den Luftvorratsbehälter 16, beispielsweise mit einem Entwässerungsventil kombiniert, einzubauen, wie es gestrichelt mit dem Feuchtesensor 15' dargestellt ist.

Kurzfassung

Die Lufttrocknungseinrichtung für im Intervallbetrieb aufladbare Druckluftanlagen weist eine regenerierbare Trocknungspatrone (5) und einen die Luftfeuchte im Luftvorratsbehälter (16) messenden Feuchtesensor (15) auf. Eine Auswertelektronik (18) veranlaßt während der Leerlaufphase des Kompressors (1) und einen Schwellwert übersteigender Luftfeuchte im Luftvorratsbehälter (16) ein Regenerieren der Trocknungspatrone (5). Ist während einer bestimmten Anzahl von aufeinanderfolgenden Leerlaufphasen jedesmal ein Regenerieren erforderlich, erregt die Auswerteelektronik (18) ein Warnsignal (22) zur Anzeige, daß die Trocknungspatrone (5) verbraucht ist und ausgetauscht werden muß.

- 8 -                                    0191151

Knorr-Bremse AG                    München, den 13.12.1984

Moosacher Straße 80                TP-ku

8000 München 40                    unser Zeichen: - 1826 -

                                   Text.Nr.: 0074P

Bezugszeichenliste

| 1  | Kompressor |
|----|-----------|
| 2  | Rohrleitung |
| 3  | Gehäuse |
| 4  | Luftrockner |
| 5  | Trocknungspatrone |
| 6  | Abblasventil |
| 7  | Rückschlagventil |
| 8  | Druckregler |
| 9  | Druckwächter |
| 10 | Magnetventil |
| 11 | Kanal |
| 12 | Ausgangsleitung |
| 13 | Steuerkanal |
| 14 | Kanal |
| 15 | Feuchtesensor |
| 15' | Feuchtesensor |
| 16 | Luftvorratsbehälter |
| 17 | Kabel |
| 18 | Auswerteelektronik |
| 19 | Kabel |
| 20 | Kabel |
| 21 | Kabel |
| 22 | Warnsignal |
| 23 | Luftbehälter |

Knorr-Bremse AG

Moosacher Straße 80

8000 München 40

München, den 13.12.1984

TP-ku    2 00 121/

unser Zeichen:/- 1826 -

Text.Nr.: 0074P

Patentansprüche

1. Lufttrocknungseinrichtung für im Intervallbetrieb aus einem Kompressor (1) aufladbare Druckluftanlagen (16), insbesondere Druckluftbremsanlagen von Kraftfahrzeugen, mit einer ein regenerierbares Trocknungsmittel beinhaltenden Trocknungspatrone (5) und einer einen Druckregler (8), ein Abblasventil (6) und ein Umschaltventil (10) aufweisenden Umschaltvorrichtung, welche vom Druckregler (8) gesteuert in ihrer einen Schaltstellung bei einem Grenzwert unterschreitender Druckhöhe in der Druckluftanlage (16) bei geschlossenem Abblasventil (6) ein Durchströmen der Trocknungspatrone (5) mit vom Kompressor (1) zur Druckluftanlage (16) zu fördernder, zu trocknender Druckluft und in ihrer zweiten Schaltstellung bei den Grenzwert übersteigender Druckhöhe in der Druckluftanlage (16) ein Öffnen des hierbei die vom Kompressor (1) geförderte Luft zur Atmosphäre abblasenden Abblasventils (6) bewirkt, wobei in der zweiten Schaltstellung ein gedrosseltes, begrenztes Durchströmen der Trocknungspatrone (5) mit Regenerierluft freigebbar ist, dadurch gekennzeichnet, daß der Trocknungspatrone (5) wie an sich bekannt ein in Abhängigkeit von der Feuchte der in die Druckluftanlage (16) geförderten Druckluft ein erstes, elektrisches Signal abgebender Feuchtesensor (15) nachgeschaltet ist, daß ein in Abhängigkeit von der Druckluftförderung des Kompressors (1) schaltender, ein zweites, elektrisches Signal abgebender Druckwächter (9) vorgesehen ist, daß eine von den beiden Signalen angesteuerte Auswerteelektronik (18) bei einen Schwellwert überschreitende Luftfeuchte und keine Druckluftförderung anzeigenden Signalen ein hierbei das Durchströmen der Trocknungspatrone (5) mit der Regenerierluft freigebendes Magnetventil (10) schaltet, und daß die Auswerteelektronik (18) einen

0191151

Zähler beinhaltet, der bei Auftreten eines gleichzeitigen Anstehens der ein Schalten des Magnetventils (10) bewirkenden Signale um den Wert 1 weiterzählt, bei alleinigem Anstehen des zweiten dieser Signale seinen Inhalt löscht und bei Erreichen einer vorbestimmten Zählerzahl eine Warnanzeige (22) einschaltet.

2. Lufttrocknungseinrichtung nach Anspruch 1, dadurch gekennzeichnet, daß das erste Signal bei einer relativen Luftfeuchte von ca. 25 % wirksam und von ca. 10 % unwirksam geschaltet wird.

3. Lufttrocknungseinrichtung nach Anspruch 1 oder 2, dadurch gekennzeichnet, daß die vorbestimmte Zählerzahl zwischen 5 und 50, vorzugsweise bei 20 liegt.

4. Lufttrocknungseinrichtung nach einem oder mehreren der vorstehenden Ansprüche, dadurch gekennzeichnet, daß die Auswerteelektronik (18) bei anstehenden Signalen das Magnetventil (10) höchstens für eine vorbestimmte Zeitspanne erregt.

5. Lufttrocknungseinrichtung nach einem oder mehreren der vorstehenden Ansprüche, dadurch gekennzeichnet, daß der Feuchtesensor (15') an einem Luftvorratsbehälter (16) der Druckluftanlage angeordnet ist.